# EUROPEAN PATENT APPLICATION

(11) **EP 4 394 967 A2**
(43) Date of publication of application: **03.07.2024**
(21) Application number: 23220741.5
(22) Date of filing: 29.12.2023
(51) Int. Cl.: H01M 10/04, H01M 10/0525, H01M 10/0585, H01M 10/0587, H01M 50/474, H01M 50/477, H01M 50/533, H01M 50/536

(54) **ELECTROCHEMICAL APPARATUS AND ELECTRONIC DEVICE**

(30) Priority: 31.12.2022 CN 202211736594
(71) Applicant: Dongguan Amperex Technology Limited, Dongguan City, Guangdong Province 523000 (CN)
(72) Inventor: JIN, Fudong, Dongguan City, Guangdong Province, People s Republic of China, 523000 (CN)
(74) Representative: Icosa

(57) **Abstract**

An electrochemical apparatus (100) includes a first electrode plate (10) and a second electrode plate (20) separated by a separator (80), and a first tab adhesive (40) and a first electrode plate adhesive (50). The first electrode plate (10) is provided with a first mounting groove (131) for accommodating the first tab adhesive (40). The second electrode plate (20) is provided with a second mounting groove (221) on a surface facing the first electrode plate (10), the first electrode plate adhesive (50) being accommodated in the second mounting groove (221). With the foregoing structure, the electrochemical apparatus (100) of some embodiments of this application can effectively solve the problem of increased overall thickness of the electrochemical apparatus (100) caused by the provision of the first tab adhesive(40) and the first electrode plate adhesive (50).

## Description

### TECHNICAL FIELD

Some embodiments of this application relate to the field of electrochemical apparatus technologies, and in particular, to an electrochemical apparatus and an electronic device.

### BACKGROUND

At present, to enhance the fast charging performance of batteries, the tab-centered structure in lithium-ion batteries has been widely used. In this structure, the tab is welded in the middle of the electrode plate so that the internal resistance of the batteries can be effectively reduced to achieve fast charging. The tab-centered structure solution may easily lead to the risk of short circuit between two electrode plates of different polarities. Therefore, it is necessary to dispose an insulating film in a region of the electrode plate corresponding to the tab to improve the safety performance of the batteries. However, after the electrode plate affixed with the insulating film is wound or stacked, the insulating film causes an increase in the thickness of the electrode assembly, affecting the energy density of the battery.

### SUMMARY

A technical problem to be mainly solved by some embodiments of this application is to provide an electrochemical apparatus and an electronic device so as to effectively solve the technical problem of increased thickness of the electrochemical apparatus caused by insulating films.

To solve the foregoing technical problem, a technical solution used in some embodiments of this application is as follows: An electrochemical apparatus is provided, including a first electrode plate and a second electrode plate separated by a separator, where the first electrode plate includes a first tab, a first current collector, and a first active substance layer disposed on a surface of the first current collector, and the second electrode plate includes a second tab, a second current collector, and a second active substance layer disposed on a surface of the second current collector. The electrochemical apparatus further includes a first tab adhesive and a first electrode plate adhesive, the first active substance layer is provided with a first mounting groove and a first groove, the first groove is located between the first mounting groove and the first current collector along a thickness direction of the first electrode plate, the first current collector is partially exposed to the first groove, the first tab is located in the first groove and is connected to the first current collector, and the first tab adhesive is provided in the first mounting groove. The second active substance layer is provided with a second mounting groove, and the first electrode plate adhesive is provided in the second mounting groove. Along a first direction, a projection of the first tab is located in the first electrode plate adhesive and the first tab adhesive, the first direction being a normal direction of a plane on which the first electrode plate is located.

Optionally, along the first direction, a projection of the first tab adhesive is located in the first electrode plate adhesive.

Optionally, along the first direction, a thickness of the first tab adhesive is less than or equal to a depth of the first mounting groove.

Optionally, along the first direction, a thickness H1 of the first tab adhesive satisfies: 6 µm ≤ H1 ≤ 30 µm; and/or a depth H2 of the first mounting groove satisfies: 6 µm ≤ H2 ≤ 50 µm.

Optionally, along a length direction of the first current collector, a width L1 of the first tab adhesive satisfies: 5 mm ≤ L1 ≤ 20 mm; and/or a width L2 of the first mounting groove satisfies: 5mm ≤ L2 ≤25 mm.

Optionally, along the first direction, a thickness of the first electrode plate adhesive is less than or equal to a depth of the second mounting groove.

Optionally, along the first direction, a thickness H3 of the first electrode plate adhesive satisfies: 6 µm ≤ H3 ≤ 30 µm; and/or a depth H4 of the second mounting groove satisfies: 6 µm ≤ H4 ≤ 40 µm.

Optionally, along a length direction of the second current collector, a width L3 of the first electrode plate adhesive satisfies: 7 mm ≤ L3 ≤ 30 mm; and/or a width L4 of the second mounting groove satisfies: 7 mm ≤ L4 ≤ 35 mm.

Optionally, the first electrode plate further includes a third active substance layer, the first current collector is located between the first active substance layer and the third active substance layer, and the third active substance layer is provided with a second groove, the second groove corresponding to the first groove. The electrochemical apparatus further includes a third electrode plate, a second tab adhesive, and a second electrode plate adhesive, where the second electrode plate and the third electrode plate are disposed on two sides of the first electrode plate, respectively; the third electrode plate includes a third current collector and a fourth active substance layer, the fourth active substance layer being disposed on a surface of the third current collector facing the first electrode plate; the second tab adhesive is provided in the third active substance layer; and the second electrode plate adhesive is provided in the fourth active substance layer. Along the first direction, a projection of the first tab is located in the second tab adhesive and the second electrode plate adhesive.

Optionally, along the first direction, a projection of the second tab adhesive is located in the second electrode plate adhesive.

Optionally, along the first direction, a sum of a thickness of the first tab adhesive and a thickness of the second tab adhesive is less than or equal to a depth of the first mounting groove.

Optionally, along the first direction, a sum of a thickness of the first electrode plate adhesive and a thickness of the second electrode plate adhesive is less than or equal to a depth of the second mounting groove.

Optionally, the third active substance layer is provided with a third mounting groove, the second groove is located between the third mounting groove and the first current collector, and the second tab adhesive is provided in the third mounting groove.

Optionally, along the first direction, a thickness of the second tab adhesive is less than or equal to a depth of the third mounting groove.

Optionally, along the first direction, a thickness H5 of the second tab adhesive satisfies: 6 µm ≤ H5 ≤ 30 µm; and/or a depth H6 of the third mounting groove satisfies: 6 µm ≤ H6 ≤ 50 µm.

Optionally, the fourth active substance layer is provided with a fourth mounting groove, and the second electrode plate adhesive is provided in the fourth mounting groove.

Optionally, along the first direction, a thickness of the second electrode plate adhesive is less than or equal to a depth of the fourth mounting groove.

Optionally, along the first direction, a thickness H5 of the second electrode plate adhesive satisfies: 6 µm ≤ H5 ≤ 30 µm; and/or a depth H6 of the fourth mounting groove satisfies: 6 µm ≤ H6 ≤ 40 µm.

To solve the foregoing technical problem, another technical solution adopted in some embodiments of this application is to provide an electronic device including the foregoing electrochemical apparatus.

The electrochemical apparatus in some embodiments of this application includes a first electrode plate and a second electrode plate separated by a separator, where the first electrode plate includes a first tab, a first current collector, and a first active substance layer disposed on a surface of the first current collector, and the second electrode plate includes a second tab, a second current collector, and a second active substance layer disposed on a surface of the second current collector. The electrochemical apparatus further includes a first tab adhesive and a first electrode plate adhesive. The first active substance layer is provided with a first mounting groove and a first groove running through the bottom of the first mounting groove. The first current collector is partially exposed to the first groove. The first tab is located in the first groove and is connected to the first current collector. The first tab adhesive is provided in the first mounting groove. The second active substance layer is provided with a second mounting groove, and the first tab adhesive is provided in the second mounting groove. Along a first direction, a projection of the first tab is located in the first electrode plate adhesive and the first tab adhesive, the first direction being a normal direction of a plane on which the first electrode plate is located. With the provision of the first mounting groove in the first active substance layer to accommodate the first tab adhesive and the provision of the second mounting groove in the second active substance layer to accommodate the first electrode plate adhesive, the thickness of the electrochemical apparatus can be effectively reduced.

### BRIEF DESCRIPTION OF DRAWINGS

To describe the technical solutions in specific embodiments of this application or in the prior art more clearly, the following briefly describes the accompanying drawings required for describing the specific embodiments or the prior art. In all drawings, similar components or parts are generally marked by similar reference signs. In the accompanying drawings, the components or parts are not necessarily drawn to the actual scale.
FIG. 1 is an exploded view of an electrochemical apparatus in a perspective according to an embodiment of this application.
FIG. 2 is a schematic diagram of a dimension of an electrochemical apparatus in a perspective according to an embodiment of this application.
FIG. 3 is an exploded view of an electrochemical apparatus in a perspective according to another embodiment of this application.
FIG. 4 is an exploded view of an electrochemical apparatus in a perspective according to still another embodiment of this application.
FIG. 5 is a schematic diagram of a dimension of an electrochemical apparatus in a perspective according to still another embodiment of this application.

### DESCRIPTION OF EMBODIMENTS

For ease of understanding of this application, the following describes this application in more detail with reference to the accompanying drawings and specific embodiments. It should be noted that when an element is referred to as being "fastened to" another element, it may be directly fastened to the another element, or there may be one or more elements in between. When an element is referred to as being "connected to" another element, it may be directly connected to the another element, or there may be one or more element in between. In the descriptions of this application, the orientations or positional relationships indicated by the terms "up", "down", "inside", "outside", "perpendicular", "horizontal", and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. In addition, the terms "first" and "second" are merely intended for a purpose of description and shall not be understood as an indication or implication of relative importance.

Unless otherwise defined, all technical and scientific terms used herein shall have the same meanings as commonly understood by those skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

In order to enhance the charging performance of the electrochemical apparatus, the tab is generally fixed to the current collector by welding. However, even after appropriate treatment processes following welding, sharp burrs may still exist in the welding region. During the assembly process of the electrochemical apparatus, these sharp burrs may easily puncture the separator between the electrode plates of different polarities, causing the separator to lose the ion selection function. This can lead to a short circuit between the positive and negative electrode plates of the electrochemical apparatus, posing a safety hazard. Therefore, it is necessary to dispose tab adhesive in the welding region between the tab and the current collector. However, direct attachment of the tab adhesive can increase the thickness of the electrochemical apparatus and lead to deformation of the electrode plate. In severe cases, it may result in lithium precipitation in the electrochemical apparatus.

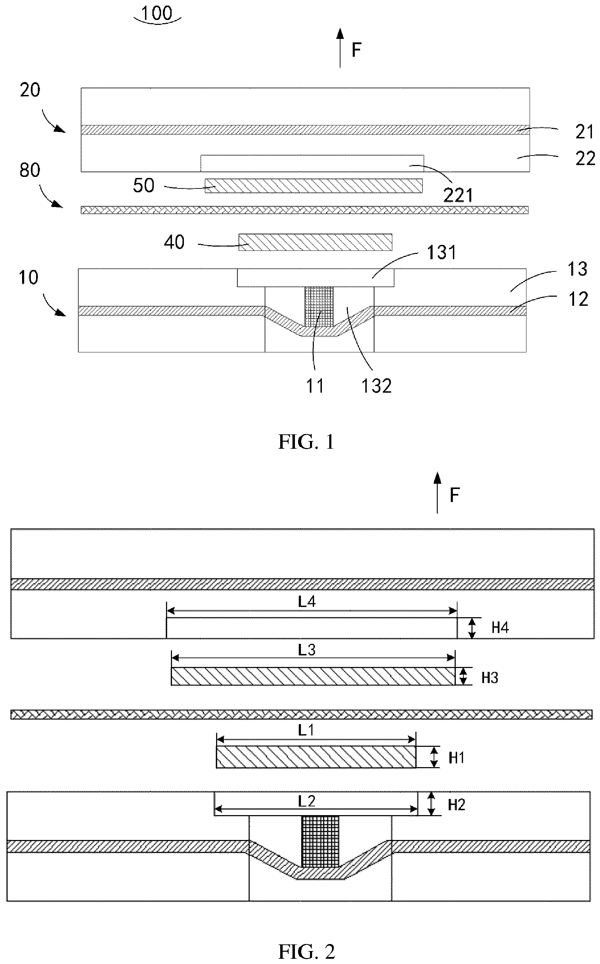

To make it easier for the reader to understand the technical solution of this application, the following description uses the first electrode plate 10 as the negative electrode plate and the second electrode plate 20 as the positive electrode plate as an example. Referring to FIG. 1, the electrochemical apparatus 100 includes a first electrode plate 10, a second electrode plate 20, a separator 80, a first tab adhesive 40, and a first electrode plate adhesive 50. The separator 80 is disposed between the first electrode plate 10 and the second electrode plate 20. The first electrode plate 10 includes a first tab 11, a first current collector 12, and a first active substance layer 13 disposed on at least one surface of a first current collector 12. The second electrode plate 20 includes a second tab, a second current collector 21, and a second active substance layer 22 disposed on at least one surface of a second current collector 21.

In an embodiment of this application, the first active substance layer 13 is provided with a first mounting groove 131 and a first groove 132. Along a thickness direction of the first electrode plate 10, the first groove is disposed between the first mounting groove and the first current collector so that the first current collector 12 is partially exposed to the first groove 132. The first tab 11 is located in the first groove 132 and connected to the first current collector 12 to form electrical conduction. Along the first direction F, a projection of the first groove 132 is located in the first tab adhesive 40. The first tab adhesive 40 is disposed in the first mounting groove 131 and is capable of covering at least the region where the first tab 11 is welded to the first current collector 12. The first tab adhesive 40 can prevent sharp burrs in the welding region where the first tab 11 is welded to the first current collector 12 from puncturing the separator 80, thereby ensuring that the separator 80 maintains its ion selection function during assembly of the electrochemical apparatus 100. The first direction F is a normal direction of a plane where the first electrode plate 10 is located. The first direction F is substantially perpendicular to the width direction of the first electrode plate 10.

By the provision of the first mounting groove 131 on the first active substance layer 13, the first tab adhesive 40 can be attached behind the first active substance layer 13, and along the first direction F, a thickness of the first tab adhesive 40 is less than or equal to a depth of the first mounting groove 131. This ensures that a surface of the first tab adhesive 40 is nearly flush with a surface of the first active substance layer 13, that is, a height difference between the surface of the first tab adhesive 40 and the surface of the first active substance layer 13 is in a range of 0 to 3 micrometers.

In some embodiments, referring to FIG. 2, along the first direction F, the thickness H1 of the first tab adhesive 40 satisfies: 6 µm ≤ H1 ≤ 30 µm; and/or the depth H2 of the first mounting groove 131 satisfies: 6 µm ≤ H2 ≤ 50 µm. Along an extension direction of the first mounting groove 131, a width L1 of the first tab adhesive 40 satisfies: 5 mm ≤ L1 ≤ 20 mm; and/or a width L2 of the first mounting groove 131 satisfies: 5 mm ≤ L2 ≤ 25 mm.

However, the provision of the first tab adhesive 40 in the first mounting groove 131 leads to a reduction in the space for intercalation or deintercalation of lithium ions on the surface of the first active substance layer 13, and the precipitation of lithium ions in the form of lithium metal is very likely to occur during the charging and discharging process of the electrochemical apparatus 100, commonly known as lithium precipitation in the battery industry. To avoid the phenomenon of lithium precipitation, it is necessary to dispose the first electrode plate adhesive 50 on the surface of the second active substance layer 22 to correspondingly reduce the space for intercalation or deintercalation of lithium ions on the surface of the second active substance layer 22, so as to make the movement of lithium ions of the electrochemical apparatus 100 in the charging and discharging process to achieve a balance. However, directly disposing the first electrode plate adhesive 50 on the surface of the second active substance layer 22 will result in an increase in the thickness of the electrochemical apparatus 100. Therefore, in some embodiments of this application, the second active substance layer 22 is provided with a second mounting groove 221, the first electrode plate adhesive 50 being disposed in the second mounting groove 221. Along the first direction F, a thickness of the first electrode plate adhesive 50 is less than or equal to a depth of the second mounting groove 221. This ensures that a surface of the first electrode plate adhesive 50 is nearly flush with a surface of the second active substance layer 22, that is, a height difference between a surface of the first electrode plate adhesive 50 and a surface of the second active substance layer 22 is in a range of 0 to 3 micrometers.

The second mounting groove 221 is provided in the second active substance layer 22 instead of the first active substance layer to avoid exacerbation of the lithium precipitation that would occur if the second mounting groove 221 is provided in the first active substance layer 13.

In some embodiments, still referring to FIG. 2, along the first direction F, the thickness H3 of the first electrode plate adhesive 50 satisfies: 6 µm ≤ H3 ≤ 30 µm; and/or the depth H4 of the second mounting groove 221 satisfies: 6 µm ≤ H4 ≤ 40 µm. Along an extension direction of the second mounting groove 221, a width L3 of the first electrode plate adhesive 50 satisfies: 7 mm ≤ L3 ≤ 30 mm; and/or a width L4 of the second mounting groove 221 satisfies: 7 mm ≤ L4 ≤ 35 mm.

Through the provision of the first mounting groove 131 in the first active substance layer 13 to accommodate the first tab adhesive 40, and the provision of the second mounting groove 221 in the second active substance layer 22 to accommodate the first electrode plate adhesive 50, the thickness of the electrochemical apparatus 100 can be effectively reduced to enable the electrochemical apparatus 100 to be adaptable to a wider range of usage scenarios. In addition, to reduce the probability of lithium precipitation occurring in the electrochemical apparatus 100, along the first direction F, a projection of the connection region between the first tab 11 and the first current collector 12 is located in the first tab adhesive 40 and the first electrode plate adhesive 50.

In some embodiments, referring to FIG. 2, along the first direction F, a projection of the first tab adhesive 40 is located in the first electrode plate adhesive 50. In other words, the coverage range of the first electrode plate adhesive 50 on the second active substance layer 22 is greater than the coverage range of the first tab adhesive 40 on the first active substance layer 13. During the charging and discharging process of the electrochemical apparatus 100, the intercalation or deintercalation movement of the lithium ions is usually perpendicular to a surface of the current collector. However, in the edge region of the tab adhesive or electrode plate adhesive, the lithium ions also undergo diffusion movement; that is, the lithium ions move from the edge of the tab adhesive or electrode plate adhesive, bypassing the tab adhesive or the electrode plate adhesive, and move toward the adjacent active substance layer, resulting in lithium precipitation caused by the insufficiency of the space for intercalation of lithium ions. Therefore, to reduce the probability of lithium precipitation of the electrochemical apparatus 100, an area of the first electrode plate adhesive 50 needs to be larger than an area of the first tab adhesive 40, that is, the projection of the first tab adhesive 40 is located in the first electrode plate adhesive 50.

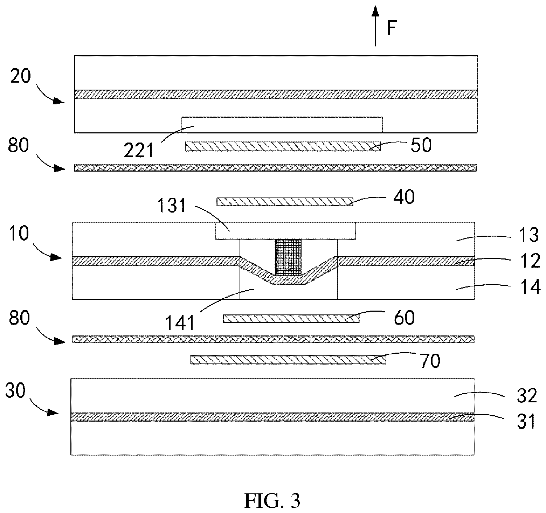

Referring to FIG. 3, the first electrode plate 10 further includes a third active substance layer 14, the first current collector 12 being located between the first active substance layer 13 and the third active substance layer 14. The third active substance layer 14 is provided with a second groove 141 corresponding to the first groove 132, the first current collector 12 being partially exposed to the second groove 141. The first current collector 12 is disposed in a bent way in the second groove 141 to enable the first current collector 12 to produce a mounting space, which facilitates the provision of the first tab 11 on the surface of the first current collector 12.

The electrochemical apparatus 100 further includes a third electrode plate 30, a second tab adhesive 60, and a second electrode plate adhesive 70. The second electrode plate 20 and the third electrode plate 30 are located on two sides of the first electrode plate 10, respectively. The third electrode plate 30 includes a third current collector 31 and a fourth active substance layer 32. The fourth active substance layer 32 is disposed on a surface of the third current collector 31 facing the first electrode plate 10. The second tab adhesive 60 is attached to the third active substance layer 14. The second electrode plate adhesive 70 is attached to the fourth active substance layer 32. In addition, along the first direction F, a projection of the first tab 11 is located in the second tab adhesive 60 and the second electrode plate adhesive 70. The second tab adhesive 60 is configured to cover a surface of the first current collector 12 exposed in the second groove 141, preventing direct exposure of the first current collector 12. Along the first direction F, a projection of the second tab adhesive 60 is located in the second electrode plate adhesive 70. A coverage area of the second electrode plate adhesive 70 is larger than a coverage area of the second tab adhesive 60. The second electrode plate adhesive 70 is configured to cover a portion of the fourth active substance layer 32 to reduce the space for intercalation or deintercalation of lithium ions in the fourth active substance layer 32, avoiding lithium precipitation in the third electrode plate 30.

It should be understood that when the electrochemical apparatus 100 is a stacked structure, the second electrode plate 20 and the third electrode plate 30 have the same polarity and are independent of each other. When the electrochemical apparatus 100 is a wound structure, the second electrode plate 20 and the third electrode plate 30 are portions of the same electrode plate from a partial perspective after winding, where the third current collector 31 in the third electrode plate 30 is the same current collector as the second current collector 21, and the fourth active substance layer 32 is the same active substance layer as the second active substance layer 22.

In some embodiments, referring to FIG. 3, the electrochemical apparatus 100 is provided with the first mounting groove 131 to accommodate the first tab adhesive 40 only in the first active substance layer 13, and is provided with the second mounting groove 221 to accommodate the first electrode plate adhesive 50 only in the second active substance layer 22. The third active substance layer 14 and the fourth active substance layer 32 are not provided with a mounting groove. To reduce the thickness of the electrochemical apparatus 100, along the first direction F, a sum of the thickness of the first tab adhesive 40 and a thickness of the second tab adhesive 60 is less than or equal to the depth of the first mounting groove 131. A sum of a thickness of the first electrode plate adhesive 50 and the thickness of the second electrode plate adhesive 70 is less than or equal to a depth of the second mounting groove 221. The first electrode plate 10, the second electrode plate 20, the third electrode plate 30, and a plurality of separators 80 need to be compressed along the first direction F after being stacked or wound. As a result, with the increased depth of the first mounting groove 131, after the first electrode plate 10 undergoes a deformation, the impact of the thickness of the second tab adhesive 60 can be mitigated by the first mounting groove 131 even though the third active substance layer 14 is not provided with a corresponding mounting groove to accommodate the second tab adhesive 60. Similarly, with the increased depth of the second mounting groove 221, after the first electrode plate 10 undergoes a deformation, the impact of the thickness of the second electrode plate adhesive 70 can be mitigated by the second mounting groove 221 even though the fourth active substance layer 32 is not provided with a corresponding mounting groove to accommodate the second electrode plate adhesive 70. Through the increase in the depth of the first mounting groove 131 and the depth of the second mounting groove 221, the impact of the second tab adhesive 60 and the second electrode plate adhesive 70 on the thickness of the electrochemical apparatus 100 can be reduced. Additionally, the need to open corresponding mounting grooves on the third active substance layer 14 and the fourth active substance layer 32 can be eliminated, enhancing productivity.

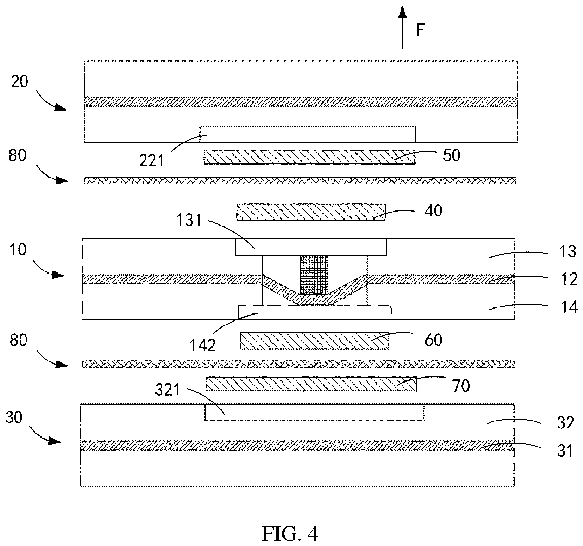

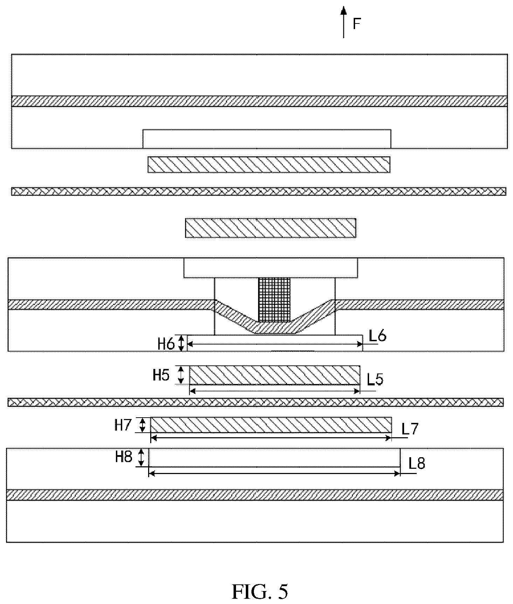

In some embodiments, referring to FIGs. 4 and 5, the third active substance layer 14 is provided with a third mounting groove 142, the second groove 141 runs through the bottom of the third mounting groove 142, and the third mounting groove 142 is configured to accommodate the second tab adhesive 60. Along the first direction F, a thickness of the second tab adhesive 60 is less than or equal to a depth of the third mounting groove 142. This ensures that a surface of the second tab adhesive 60 is nearly flush with a surface of the third active substance layer 14, that is, a height difference between the surface of the second tab adhesive 60 and the surface of the third active substance layer 14 is in a range of 0 to 3 micrometers. In an embodiment, along the first direction F, the thickness H5 of the second tab adhesive 60 satisfies: 6 µm ≤ H5 ≤ 30 µm; and/or the depth H6 of the third mounting groove 142 satisfies: 6 µm ≤ H6 ≤ 50 µm. Along an extension direction of the third mounting groove 142, a width L5 of the second tab adhesive 60 satisfies: 5 mm ≤ L5 ≤ 20 mm; and/or a width L6 of the second mounting groove 221 satisfies: 5 mm ≤ L6 ≤ 25 mm.

In some embodiments, still referring to FIGs. 4 and 5, the fourth active substance layer 32 is provided with a fourth mounting groove 321, and the fourth mounting groove 321 is configured to accommodate the second electrode plate adhesive 70. Along the first direction F, a projection of the first tab 11 is located in the second tab adhesive 60 and the second electrode plate adhesive 70, and a coverage area of the second electrode plate adhesive 70 is larger than a coverage area of the second tab adhesive 60. Along the first direction F, a thickness of the second electrode plate adhesive 70 is less than or equal to a depth of the fourth mounting groove 321. This ensures that a surface of the second electrode plate adhesive 70 is nearly flush with a surface of the fourth active substance layer 32, that is, a height difference between the surface of the second electrode plate adhesive 70 and the surface of the fourth active substance layer 32 is in a range of 0 to 3 micrometers. In an embodiment, along the first direction F, the thickness H5 of the second electrode plate adhesive 70 satisfies: 6 µm ≤ H5 ≤ 30 µm; and/or the depth H6 of the fourth mounting groove 321 satisfies: 6 µm ≤ H6 ≤ 40 µm. Along an extension direction of the fourth mounting groove 321, a width L7 of the second electrode plate adhesive 70 satisfies: 7 mm ≤ L7 ≤ 30 mm; and/or a width L8 of the fourth mounting groove 321 satisfies: 7 mm ≤ L8 ≤ 35 mm.

The electrochemical apparatus 100 in some embodiments of this application includes a first electrode plate 10 and a second electrode plate 20 separated by a separator 80, where the first electrode plate 10 includes a first tab 11, a first current collector 12, and a first active substance layer 13 disposed on a surface of the first current collector 12, and the second electrode plate 20 includes a second tab, a second current collector 21, and a second active substance layer 22 disposed on a surface of the second current collector 21. The electrochemical apparatus 100 further includes a first tab adhesive 40 and a first electrode plate adhesive 50. The first active substance layer 13 is provided with a first mounting groove 131 and a first groove 132 running through the bottom of the first mounting groove 131. The first current collector 12 is partially exposed to the first groove 132. The first tab 11 is located in the first groove 132 and is connected to the first current collector 12. The first tab adhesive 40 is disposed in the first mounting groove 131. The second active substance layer 22 is provided with a second mounting groove 221, and the first electrode plate adhesive 50 is disposed in the second mounting groove 221. Along a first direction F, a projection of the first tab 11 is located in the first electrode plate adhesive 50 and the first tab adhesive 40, the first direction F being a normal direction of a plane where the first electrode plate 10 is located. Through the provision of the first mounting groove 131 in the first active substance layer 13 to accommodate the first tab adhesive 40 and the provision of the second mounting groove 221 in the second active substance layer 22 to accommodate the first electrode plate adhesive 50, the thickness of the electrochemical apparatus 100 can be effectively reduced.

This application further provides an embodiment of an electronic device, where the electronic device includes an electrochemical apparatus. For the structure and function of the electrochemical apparatus, refer to the foregoing embodiments. Details are not repeated herein.

The foregoing descriptions are merely some embodiments of this application, but are not intended to limit the patent scope of this application. Any equivalent structural transformations or equivalent process transformations made by using the content of the specification and drawings or direct or indirect application of the content of the specification and drawings to other related technical fields should fall within the patent protection scope of this application.

## Claims

1. An electrochemical apparatus (100), comprising a first electrode plate (10) and a second electrode plate (20) separated by a separator (80); wherein the first electrode plate (10) comprises a first tab (11), a first current collector (12), and a first active substance layer (13) disposed on a surface of the first current collector (12); and the second electrode plate (20) comprises a second tab, a second current collector (21), and a second active substance layer (22) disposed on a surface of the second current collector (21), wherein
the electrochemical apparatus (100) further comprises a first tab adhesive (40) and a first electrode plate adhesive (50), the first active substance layer (13) is provided with a first mounting groove (131) and a first groove (132), the first groove (132) is located between the first mounting groove (131) and the first current collector (12) along a thickness direction of the first electrode plate (10), the first current collector (12) is partially exposed to the first groove (132), the first tab (11) is located in the first groove (132) and is connected to the first current collector (12), and the first tab adhesive (40) is provided in the first mounting groove (131);
the second active substance layer (22) is provided with a second mounting groove (221), and the first electrode plate adhesive (50) is provided in the second mounting groove (221); and
along a first direction (F), a projection of the first tab (11) is located in the first electrode plate adhesive (50) and the first tab adhesive (40), the first direction (F) being a normal direction of a plane on which the first electrode plate (10) is located.

2. The electrochemical apparatus (100) according to claim 1, wherein
along the first direction (F), a projection of the first tab adhesive (40) is located in the first electrode plate adhesive (50).

3. The electrochemical apparatus (100) according to claim 1, wherein
along the first direction (F), a thickness of the first tab adhesive (40) is less than or equal to a depth of the first mounting groove (131); along the first direction (F), a thickness H1 of the first tab adhesive (40) satisfies: 6 µm ≤ H1 ≤ 30 µm; and/or a depth H2 of the first mounting groove (131) satisfies: 6 µm ≤ H2 ≤ 50 µm.

4. The electrochemical apparatus (100) according to claim 1, wherein
wherein, along a length direction of the first current collector (12), a width L1 of the first tab adhesive (40) satisfies: 5 mm ≤ L1 ≤ 20 mm; and/or a width L2 of the first mounting groove (131) satisfies: 5mm ≤ L2 <25 mm.

5. The electrochemical apparatus (100) according to claim 1, wherein
along the first direction (F), a thickness of the first electrode plate adhesive (50) is less than or equal to a depth of the second mounting groove (221);
wherein, along the first direction (F), a thickness H3 of the first electrode plate adhesive (50) satisfies: 6 µm ≤ H3 ≤ 30 µm; and/or a depth H4 of the second mounting groove (221) satisfies: 6 µm ≤ H4 ≤ 40 µm.

6. The electrochemical apparatus (100) according to claim 1, wherein
along a length direction of the second current collector (21), a width L3 of the first electrode plate adhesive (50) satisfies: 7 mm ≤ L3 ≤ 30 mm; and/or a width L4 of the second mounting groove (221) satisfies: 7 mm ≤ L4 ≤ 35 mm.

7. The electrochemical apparatus (100) according to claim 1, wherein
the first electrode plate (10) further comprises a third active substance layer (14), the first current collector (12) is located between the first active substance layer (13) and the third active substance layer (14), and the third active substance layer (14) is provided with a second groove (141), the second groove (141) corresponding to the first groove (132);
the electrochemical apparatus (100) further comprises a third electrode plate (30), a second tab adhesive (60), and a second electrode plate adhesive (70); wherein the second electrode plate (20) and the third electrode plate (30) are located on two sides of the first electrode plate (10), respectively; the third electrode plate (30) comprises a third current collector (31) and a fourth active substance layer (32), the fourth active substance layer (32) being disposed on a surface of the third current collector (31) facing the first electrode plate (10); the second tab adhesive (60) is provided in the third active substance layer (14); and the second electrode plate adhesive (70) is provided in the fourth active substance layer (32); and
along the first direction (F), a projection of the first tab (11) is located in the second tab adhesive (60) and the second electrode plate adhesive (70).

8. The electrochemical apparatus (100) according to claim 7, wherein
along the first direction (F), a projection of the second tab adhesive (60) is located in the second electrode plate adhesive (70).

9. The electrochemical apparatus (100) according to claim7, wherein
along the first direction (F), a sum of a thickness of the first tab adhesive (40) and a thickness of the second tab adhesive (60) is less than or equal to a depth of the first mounting groove (131).

10. The electrochemical apparatus (100) according to claim 7, wherein
along the first direction (F), a sum of a thickness of the first electrode plate adhesive (50) and a thickness of the second electrode plate adhesive (70) is less than or equal to a depth of the second mounting groove (221).

11. The electrochemical apparatus (100) according to claim7, wherein
the third active substance layer (14) is provided with a third mounting groove (142), the second groove (141) is located between the third mounting groove (142) and the first current collector (12), and the second tab adhesive (60) is provided in the third mounting groove (142).

12. The electrochemical apparatus (100) according to claim 11, wherein
along the first direction (F), a thickness of the second tab adhesive (60) is less than or equal to a depth of the third mounting groove (142).

13. The electrochemical apparatus (100) according to claim 12, wherein
along the first direction (F), a thickness H5 of the second tab adhesive (60) satisfies: 6 µm ≤ H5 ≤ 30 µm; and/or a depth H6 of the third mounting groove (142) satisfies: 6 µm ≤ H6 ≤ 50 µm;
wherein, the fourth active substance layer (32) is provided with a fourth mounting groove (321), and the second electrode plate adhesive (70) is provided in the fourth mounting groove (321).

14. The electrochemical apparatus (100) according to claim 13, wherein
along the first direction (F), a thickness of the second electrode plate adhesive (70) is less than or equal to a depth of the fourth mounting groove (321); wherein,
along the first direction (F), a thickness H5 of the second electrode plate adhesive (70) satisfies: 6 µm ≤ H5 ≤ 30 µm; and/or a depth H6 of the fourth mounting groove (321) satisfies: 6 µm ≤ H6 ≤ 40 µm.

15. An electronic device, comprising an electrochemical apparatus (100) according to any one of claims 1 to 14.
